# EUROPÄISCHE PATENTSCHRIFT

(11) **EP 3 758 910 B1**
(45) Veröffentlichungstag und Bekanntmachung des Hinweises auf die Patenterteilung: **05.04.2023**
(21) Anmeldenummer: 19720526.3
(22) Anmeldetag: 25.04.2019
(51) Int. Cl.: B29C 48/09, B29C 48/151, B29C 44/32, B29C 44/24, F16L 59/14, B29C 48/34, B29C 48/30, B29C 48/21, B29C 48/87

(54) **VERFAHREN UND VORRICHTUNG ZUR HERSTELLUNG EINES WÄRMEGEDÄMMTEN LEITUNGSROHRS**
METHOD AND DEVICE FOR PRODUCING A HEAT-INSULATED CONDUIT PIPE
PROCÉDÉ ET DISPOSITIF POUR LA FABRICATION D'UN TUYAU DE CONDUITE À ISOLATION THERMIQUE

(30) Priorität: 07.05.2018 CH 5702018
(43) Veröffentlichungstag der Anmeldung: 06.01.2021
(73) Patentinhaber: Brugg Rohr AG Holding, 5200 Brugg (CH)
(72) Erfinder: OESCHGER, Alfred, 5276 Wil (CH)
(74) Vertreter: E. Blum & Co. AG
(86) Internationale Anmeldenummer: PCT/EP2019/060583
(87) Internationale Veröffentlichungsnummer: WO 2019/214954

(56) Entgegenhaltungen:
- WO-A1-86/05570
- WO-A1-86/05570
- WO-A1-2014/122278
- WO-A1-2014/122278
- WO-A1-2014/122278
- GB-A- 1 157 239
- GB-A- 1 157 239
- GB-A- 1 157 239

## Beschreibung

### Gebiet der Erfindung

Die Erfindung betrifft ein Verfahren zur kontinuierlichen Herstellung eines Leitungsrohrs gemäss Oberbegriff des Anspruchs 1. Ferner betrifft die Erfindung eine Vorrichtung zur Herstellung eines solchen Leitungsrohrs.

### Hintergrund

Wärmegedämmte, gewellte Leitungsrohre sind bekannt und werden zum Beispiel für die Fernwärmeversorgung eingesetzt. Auch für den Transport von Flüssigkeiten oder Gasen für andere Anwendungen, insbesondere in der Öl- und Gasindustrie, werden solche Leitungen eingesetzt. Ein bekanntes Verfahren zu deren kontinuierlichen Herstellung ist in EP 0 897 788 A1 beschrieben. Dabei wird mindestens ein Innenrohr mit einem Folienschlauch umhüllt und in den Folienschlauch wird Kunststoffmaterial eingebracht, welches aufschäumt und die Wärmedämmung bildet. Nach dem Durchlaufen von Formbacken zur Bildung der Wellung wird auf die gewellte Oberfläche des Schlauchs der Aussenmantel extrudiert. Dieses Verfahren hat sich bewährt. Für die Erzielung einer tiefen Wellung, welche für die Wickelbarkeit der Leitungsrohre für den Transport und für die Ermöglichung von kleinen Radien bei deren Verlegung bevorzugt sind, schlägt es WO 2010/085906 A1 vor, das Leitungsrohr bei dessen Herstellung nach dem Extruder mit zusätzlichen Formwerkzeugen zu bearbeiten. Damit lässt sich eine tiefe Wellung erzielen, das Verfahren ist aber aufwändig und verlängert die Herstellungsanlage. WO 2014/122278 A1 schlägt zur Erzielung eines sehr flexiblen Leitungsrohrs und einer Herstellvorrichtung mit geringem Platzbedarf vor, den Aussenmantel direkt auf den noch expandierenden Verbund aus Folienschlauch und Wärmedämmung zu extrudieren und den damit entstandenen Verbund aus noch expandierender Wärmedämmung und darauf befindlichem glatten Aussenmantel durch einen Corrugator zu führen, in welchem die Wärmedämmung mit dem Aussenmantel zusammen weiter expandiert. Dabei wird das Aussenmantelmaterial durch den expandierenden Wärmedämmschaum in die Vertiefungen des Corrugators gedrückt. Ein weiteres Verfahren ist aus WO 2008/142211 A1 bekannt. Ein mit ausgehärtetem PU-Schaum umgebenes Innenrohr wird mit einer PE-Matte umwickelt, worauf eine Folie eng um die PE-Matte gewickelt wird. Auf diesen Verbund wird in einem Corrugator der korrugierte Mantel aufgebracht, wobei durch die Wärme die Folie aufplatzt und die PE-Matte in ihren Ausgangszustand expandieren kann, wodurch das gedämmte Rohr in dem korrugierten Mantel eingeklemmt wird.

GB 1,157,239 offenbart ein Verfahren zur kontinuierlichen Herstellung von thermisch isolierten Rohren bei dem ein schäumender Kunststoff verwendet wird, der zwischen einer Folie und einem Innenrohr angeordnet ist und das thermisch isolierte Rohr mit einem Mantelrohr versehen wird.

WO 2014/122278 offenbart ein Verfahren zur Herstellung eines thermisch gedämmten Leitungsrohrs bei dem ein schäumender Kunststoff zwischen einer Folie und einem Innenrohr eingebracht wird. Danach wird ein Mantelrohr auf diese Anordnung extrudiert und die resultierende Anordnung in einen Corrugator geführt.

### Darstellung der Erfindung

Der Erfindung liegt die Aufgabe zu Grunde ein weiteres Herstellverfahren zu schaffen. Dies soll ein Leitungsrohr mit einer tiefen Wellung und somit hohen Flexibilität ermöglichen.

Dies wird bei einem Herstellverfahren der eingangs genannten Art dadurch erreicht, dass der Aussenmantel getrennt von dem vom Folienschlauch umgebenen Innenrohr in den Corrugator geführt und in diesem geformt wird, worauf die Schäumung der Wärmedämmung im bereits geformten Aussenmantel erfolgt.

Bei der vorliegenden Erfindung bzw. dem Verfahren zur kontinuierlichen Herstellung eines wärmegedämmten, gewellten Leitungsrohrs mit einem Innenrohr wird somit zunächst der gewellte Aussenmantel mit einem Extruder und mit einem Corrugator erzeugt und das in einem Folienschlauch zusammen mit einem schaumbildenden Ausgangsmaterial angeordnete Innenrohr wird bis in den Corrugator geführt, in welchem der zuvor im Corrugator geformte Aussenmantel des Leitungsrohrs mit dem Wärmedämmschaum gefüllt wird. Das Verfahren eignet sich auch gut zur Herstellung von Rohren mit einer sehr dünnen Wärmedämmung.

Die Korrugation des Aussenmantels im Corrugator erfolgt unabhängig vom Schäumdruck, was eine sehr gut beherrschbare Bildung bzw. Formung des gewellten Aussenmantels ohne Fehlstellen im Aussenmantel und, sofern gewünscht, mit einer grossen Welltiefe ermöglicht. Die erst im schon geformten Aussenmantel erfolgende Schaumbildung hat keinen wesentlichen Einfluss auf die Form des Aussenmantels, zumal die Schaumbildung nach vorgängiger Bildung des gewellten Aussenmantels aber bevorzugt noch im Corrugator erfolgt, in welchem der Aussenmantel stabil gehalten ist. Zur Bildung des Aussenmantels im Corrugator wird insbesondere ein Vakuum-Corrugator eingesetzt, bei welchem die Formgebung durch ein zwischen den Formteilen des Corrugators und dem zu formenden Aussenmantel wirkendes Vakuum erfolgt.

Damit die Schaumbildung erst im Corrugator erfolgt, wird ein Gemisch von Ausgangsmaterialien zur Bildung des Isolierschaums verwendet, dessen Reaktivität so eingestellt wird, dass je nach der Geschwindigkeit der Herstellungslinie für das Leitungsrohr und den Temperaturverhältnissen die Schäumreaktion erst im Corrugator erfolgt. In der Regel wird ein Zweikomponentengemisch verwendet, insbesondere Polyol und Isocyanat umfassend zur Bildung eines Polyurethanschaums. Insbesondere wird die Reaktivität so eingestellt, dass die Schaumbildung nach 10 Sekunden bis 60 Sekunden und insbesondere nach 15 Sekunden bis 20 Sekunden erfolgt. Mit der angegebenen Startzeit erfolgt die Schaumbildung hauptsächlich erst nach Bildung des fertig geformten Aussenmantels im Corrugator bzw. das Gemisch aus den schaumbildenden Komponenten ist noch flüssig, wenn es - in der den Folienschlauch bildenden Folie liegend - im Corrugator eintrifft. Zusätzlich oder alternativ wird die Schaumbildung des Ausgangsmaterials im Folienschlauch beeinflusst, indem bei dessen Hindurchführung durch den Extruder eine Kühlung erfolgt.

Bevorzugt wird das Verfahren so ausgeführt, dass ein durch den Extruder geführtes Schutzrohr verwendet wird, in welchem das vom Folienschlauch umgebene Innenrohr durch den Extruder geführt wird, wobei das Schutzrohr bis in die geschlossenen Formteile des Corrugators geführt ist. Der Aussenmantel wird im Corrugator über dem Schutzrohr korrugiert. Bevorzugt ist das Schutzrohr aussenseitig und vorzugsweise auch innenseitig mit einer reibungsmindernden Beschichtung versehen, insbesondere mit einer Polytetrafluorethylen (PTFE) enthaltenden oder aus diesem bestehenden Beschichtung. Die aussenseitige Beschichtung verhindert ein Kleben des aus dem Extruder austretenden Aussenmantelmaterials an dem Schutzrohr, sollte das Aussenmaterial, welches normalerweise vom Extruder direkt in die Vakuumzone des Corrugators gelangt, mit dem Schutzrohr in Berührung kommen, was nicht beabsichtigt ist aber geschehen kann. In der Regel ist das Aussenmantelmaterial Polyethylen hoher Dichte (HDPE) oder es ist ein anderes für den Aussenmantel von Leitungsrohren der genannten Art verwendetes Kunststoffmaterial, wobei dessen Anhaften am Schutzrohr durch eine PTFE-Beschichtung oder eine andere haftungs- und reibungsmindernde Beschichtung des Schutzrohrs vermeidbar ist. Vorzugsweise ist das Schutzrohr in Längsrichtung des Extruders verstellbar angeordnet, wodurch die Lage des vorderen Endes des Schutzrohrs im Corrugator eingestellt werden kann. Damit kann das Schutzrohr soweit in den Corrugator geführt werden, dass der Aussenmantel fertig geformt ist, bevor er dem Schäumdruck des sich bildenden Wärmedämmschaums ausgesetzt wird.

Es ist erwünscht, dass sich die vom expandierenden Schaum an den korrugierten Aussenmantel innenseitig angedrückte Folie des Folienschlauchs unter Wirkung der vorhandenen Prozesswärme mit dem Aussenmantel verbindet bzw. verschweisst. Dies ist bei einer aus Polyethylen (PE) gebildeten Folie der Fall. Vorteilhaft ist insbesondere auch eine mit Polyethylen (PE) beschichtet Folie verwendbar, insbesondere eine beidseitig mit Polyethylen beschichtete Polyamidfolie, deren Vorteil in einer höheren Temperaturbeständigkeit liegt. Vorteilhaft wird eine Folie mit geringen Dicke von 0.01 bis 0.20 mm und insbesondere mit einer Dicke von 50 µm bis 120 µm verwendet.

Der Erfindung liegt weiter die Aufgabe zu Grunde, eine Vorrichtung zur Herstellung eines wärmegedämmten, gewellten Leitungsrohrs bereitzustellen.

Diese Aufgabe wird mit einer Vorrichtung gemäss Anspruch 10 gelöst.

Die zur Ausführung des Verfahrens vorgesehene Vorrichtung weist somit ein Schutzrohr auf, mittels welchem das vom Folienschlauch umgebene Innenrohr getrennt von der Extrusion und Korrugation des Aussenmantels bis in den Corrugator führbar ist.

Die Vorrichtung ist so ausgestaltet, dass das Ende des in den Corrugator geführten Schutzrohrs in dem Bereich des Corrugators zu liegen kommt, in welchen die Formbacken des Corrugators vollständig geschlossen sind. Das Schutzrohr ist in der Vorrichtung derart gehalten, dass es in seiner Längsrichtung einstellbar verschiebbar ist. Weiter ist eine Kühleinrichtung vorgesehen, durch welche das Schutzrohr innerhalb des Extruders kühlbar ist, wodurch eine zu früh erfolgende Schaumbildung einfach vermeidbar ist. Ferner ist die Vorrichtung bevorzugt so ausgestaltet, dass das Schutzrohr aussenseitig und innenseitig mit einer reibungsmindernden Beschichtung versehen ist.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 eine schaubildliche, teilweise geschnittene Darstellung eines wärmegedämmten, gewellten Leitungsrohrs;
Figur 2 eine grob schematische Seitenansicht einer Vorrichtung zur kontinuierlichen Herstellung eines Leitungsrohres;
Figur 3 schematisch eine Draufsicht auf den Bereich der Vorrichtung, in welchem die Extrusion des Aussenmantels und die Erzeugung der gewellten Form (die Korrugation) erfolgt; und
Figur 4 eine schematische Seitenansicht der Vorrichtung von Figur 3.

### Weg(e) zur Ausführung der Erfindung

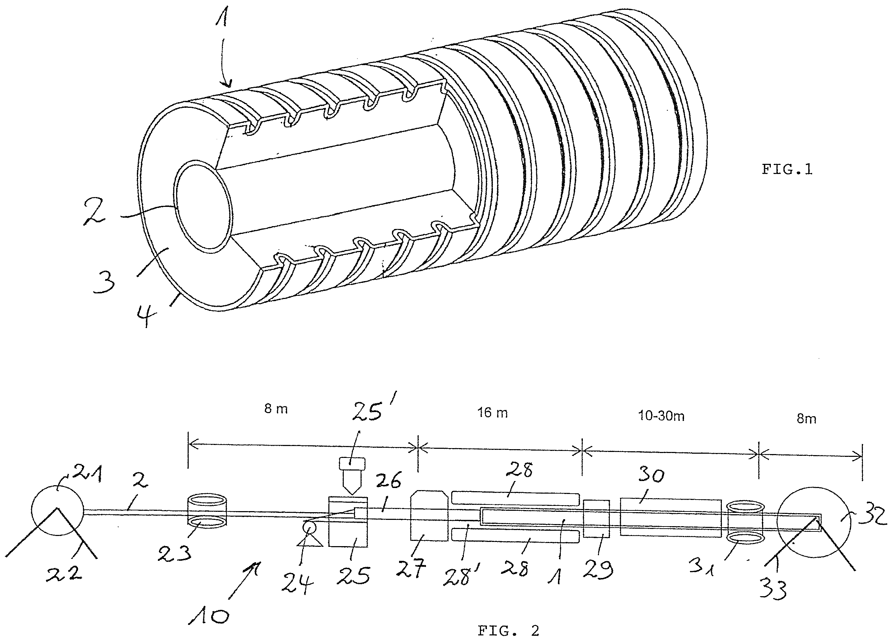

In Figur 1 ist ein Abschnitt eines wärmegedämmten, gewellten Leitungsrohrs 1 gezeigt, wie es nach dem Verfahren kontinuierlich und in grosser Länge hergestellt werden kann. Das Leitungsrohr 1 weist ein Innenrohr 2 aus Kunststoff oder Metall, eine geschäumte Wärmedämmung 3 aus Kunststoff, insbesondere aus einem Polyurethanschaum, und einen gewellten Aussenmantel 4 aus Kunststoff auf. Der Aussendurchmesser solcher Rohre liegt insbesondere im Bereich von 70 mm bis 350 mm. Das dargestellte Leitungsrohr ist nur als ein Beispiel und zum besseren Verständnis der nachfolgend erläuterten Erfindung zu verstehen. Gemäss der Erfindung hergestellte Leitungsrohre können insbesondere mehr als ein Innenrohr aufweisen. Sie können eine Wellung aufweisen, welche sich in Form und Tiefe von der dargestellten Wellung unterscheidet. Ferner kann es sich bei einem nach dem Verfahren hergestellten Leitungsrohr auch so verhalten, dass der Wärmedämmschaum nicht an allen Stellen am Aussenmantel anliegt, insbesondere nicht in den Wellenbergen. Somit können in den Wellenbergen des Aussenmantels Hohlräume bestehen bleiben. Dies kann gewünscht sein und eine grössere Flexibilität des Leitungsrohrs ergeben.

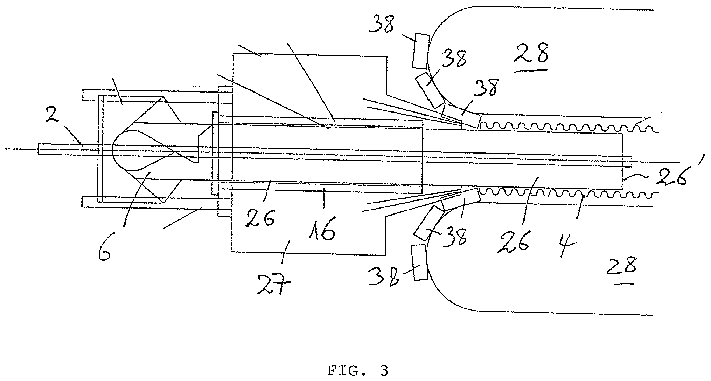

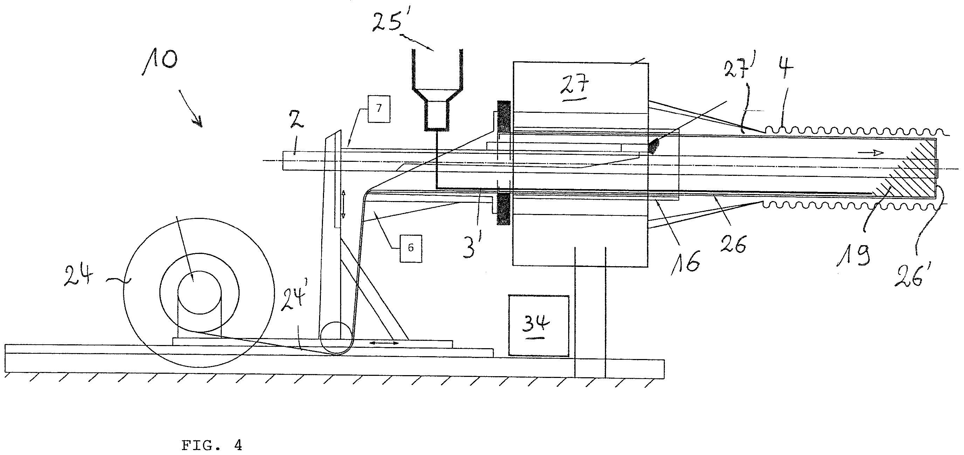

Figur 2 zeigt grob schematisch eine Vorrichtung 10 zur Durchführung des Verfahrens zum Zweck eines Überblicks. Die besonderen Verfahrensschritte und Vorrichtungsmerkmale werden nachfolgend an Hand der Figuren 3 und 4 detaillierter dargestellt. Ganz links in Figur 2 ist ein auf einer Einrichtung 22 angeordneter Wickel 21 gezeigt, von welchem bei der Herstellung des Leitungsrohrs 1 das Innenrohr 2 abgewickelt wird. Werden im Leitungsrohr mehrere Innenrohre vorgesehen, so sind entsprechend mehrere Wickel vorgesehen. Die verwendeten Innenrohre unterscheiden sich bei der vorliegenden Erfindung nicht von den der Fachperson bekannten herkömmlich verwendeten Innenrohren, welche insbesondere aus Kunststoff oder aus Metall bestehen können. Eine Führung 23 führt das Innenrohr 2 zu einer Station 25, in welcher aus der von einem Folienwickel 24 abgewickelten Folie auf bekannte Weise ein zunächst noch entlang seiner Längsnaht offener Folienschlauch gebildet wird, der das Innenrohr 2 umgibt. In den noch offenen Folienschlauch werden die Reaktionskomponenten eingebracht, welche nachfolgend die geschäumte Wärmedämmung 3 des Leitungsrohrs 1 bilden. Dazu ist ein Mischkopf 25' schematisch dargestellt. Auch dies ist der Fachperson grundsätzlich bekannt und wird hier nicht weiter erklärt. In der Station 25 kann auch das nachfolgend genauer erläuterte Schutzrohr 26 beginnen, welches in Längsrichtung der im Wesentlichen linienförmig aufgebauten Vorrichtung 10 liegt. In dem Schutzrohr 26 wird das Innenrohr 2 mit dem Folienschlauch und den noch flüssigen Reaktionskomponenten durch den Extruder 27 geführt.

Das Extrudat tritt aus dem Extruder 27 aus und gelangt in die Formteile des Corrugators 28, in welchem der Aussenmantel 4 des Leitungsrohrs 1 mit der gewünschten Wellenform versehen und fertig gestellt wird. Dies erfolgt im Bereich 28', in welchem das vom Folienschlauch umgebene Innenrohr 2 noch im Schutzrohr 26 verläuft. Wenn das Innenrohr 2 das Schutzrohr 26 verlässt, kann der expandierende Wärmedämmschaum den bereits fertig korrugierten Aussenmantel 4 füllen, womit das Leitungsrohr 1 gebildet wird. Diese Füllung erfolgt vorzugsweise noch innerhalb des Corrugators 28. Anschliessend an den Corrugator 28 kann ein der Fachperson bekanntes Messgerät 29 folgen, welches prüft, ob das Innenrohr 2 im Rahmen der vorgegebenen Toleranz zentrisch im Leitungsrohr 1 liegt. Es folgt eine Kühlstation 30 sowie ein das Leitungsrohr ziehender Transport 31 sowie eine Wickelstation 33 zur Bildung eines Wickels 32 des fertiggestellten Leitungsrohrs 1.

Die Produktionsgeschwindigkeit der Vorrichtung kann zum Beispiel zwischen 3 m/min und 6 m/min liegen. In der Figur 2 sind als Anhaltspunkt beispielhafte Längenangaben in Metern für verschiedene Abschnitte der Vorrichtung angegeben.

Die Figuren 3 und 4 zeigen schematisch in Draufsicht und Seitenansicht einen Teil der Vorrichtung 10 zur genaueren Erläuterung des Verfahrens. Gleiche Bezugszeichen wie in den Figuren 1 und 2 verwendet bezeichnen dabei identische oder funktionsgleiche Elemente. Ersichtlich ist, wie das Innenrohr 2 in eine Rohrführung 7 gelangt. Diese ist in ihrer Höhe ab der Standfläche der Vorrichtung 10 einstellbar, was durch den eingetragenen Doppelpfeil dargestellt wird. Die vom Folienwickel 24 abgewickelte Folie 24' wird zur Bildung des Folienschlauchs mittels eines Formteils 6 um das Innenrohr 2 gelegt und zusammen mit diesem in den Extruder 27 geführt und die Längsnaht des Folienschlauchs wird auf bekannte Weise geschlossen, insbesondere mindestens zum Teil verschweisst. Zuvor werden die den Wärmedämmschaum bildenden Komponenten über den Mischkopf 25' in flüssiger Form in den Folienschlauch eingebracht und sind dort als noch flüssiges Gemisch 3' vorhanden.

Im Extruder 27 verläuft in Längsrichtung der Vorrichtung liegend das Schutzrohr 26. Das Innenrohr 2 mit dem Folienschlauch wird im Inneren des Schutzrohrs durch den Extruder geführt. Das freie Ende 26' des Schutzrohrs 26 liegt im Corrugator 28.

Die Extrusion des Materials des Aussenmantels 4 des Leitungsrohrs erfolgt durch den Extruder 27 auf dem Fachmann grundsätzlich bekannte Weise. Das Aussenmantelmaterial aus Kunststoff, zum Beispiel ein HDPE, wird im Extruder aufgeschmolzen und verlässt als Extrudat den ringförmigen Auslass 27' des Extruders 27. Dies erfolgt vollständig getrennt vom Innenrohr, welches innerhalb des Schutzrohrs verlaufend durch das Schutzrohr vom Extruder getrennt ist. Damit kann zunächst der gewellte Aussenmantel 4 im Corrugator hergestellt werden. Vom Extruder gelangt das extrudierte Aussenmantelmaterial direkt in den Corrugator 28. Der Corrugator 28 ist in Figur 3 schematisch und teilweise mit je drei Formteilen 38 bzw. Formhälften für die Wellung und mit dem nur als Linie dargestellten Transportmittel für die Formteile gezeigt, da der Corrugator ein der Fachperson bekanntes Element ist, welches vorliegend auf grundsätzlich bekannte Weise betrieben wird. Natürlich weist der Corrugator mehr Formteile auf und bildet auf bekannte Weise eine über eine vorgegebene Länge mit dem Aussenmantel 4 mitlaufende Form aus. Die Formteile 38 schliessen sich über dem Schutzrohr 26 kurz nach dem Auslass des Extruders 27 und bilden dabei die mitlaufende geschlossene Form. In Figur 4 ist der Corrugator zur Vereinfachung der Zeichnung gar nicht dargestellt. Durch die Formteile, in der Regel Formhälften, wird das extrudierte Material des Aussenmantels umgeben und in seinem noch verformbaren Zustand, in welchem es den Extruder verlassen hat, zu der durch die Formteile vorgegebenen Wellform verformt. Das entsprechend geformte Aussenmantelmaterial bildet somit den Aussenmantel 4 für das Leitungsrohr 1. Die Formgebung im Corrugator erfolgt auf bekannte Weise durch ein Vakuum, welches über die Formteile bzw. Formhälften auf das extrudierte Material wirkt und dadurch das Aussenmantelmaterial in die Formteile hineinzieht, um den gewellten Aussenmantel 4 zu bilden. Wie in Figur 3 und 4 ersichtlich, wird der Aussenmantel 4 im Corrugator fertig geformt, während das Innenrohr 2 mit dem Folienschlauch und den darin befindlichen Reaktionskomponenten noch im Schutzrohr 26 verläuft, welches in den Corrugator hineinreicht.

Die Startzeit für die Reaktion der über den Mischkopf in den Folienschlauch eingefüllten Reaktionskomponenten wird so eingestellt, dass die Schaumbildung und damit die sogenannte Schäumfront hauptsächlich erst im Endbereich des Schutzrohrs oder nach dem Ende 26' des Schutzrohrs entsteht. In Figur 4 ist für das vorliegende Beispiel die Schäumfront 19 als schraffierte Fläche zur Erläuterung angedeutet. Ausgehend von den zunächst noch im Schutzrohr bzw. im Folienschlauch flüssig vorliegenden Komponenten entwickelt sich die ansteigende Schäumfront 19. Der Wärmedämmschaum füllt dann nach dem Schutzrohr 26 den zuvor im Corrugator geformten Aussenmantel, bzw. die Füllung des Aussenmantels 4 mit dem Wärmedämmschaum 3 erfolgt bei der Schäumfront. Der Aussenmantel 4 wird durch die mitlaufenden Formteile des Corrugators gegen den Schäumdruck gestützt. Die Steigzone bzw. die Schäumfront 19 beginnt im Corrugator erst nachdem der Aussenmantel in diesem schon fertig gebildet ist.

Entsprechend der Länge der Herstellvorrichtung vom Einfüllen der Reaktionskomponenten in den Folienschlauch bis zum Endbereich des Schutzrohrs, wo die Reaktion beginnt und entsprechend der Herstellungsgeschwindigkeit für das Leitungsrohr in Meter pro Sekunde muss die Startzeit des Komponentengemischs, welches den Wärmedämmschaum bildet, eingestellt sein. Diese Einstellung für den Beginn der Reaktion kann im Bereich von 10 Sekunden bis 60 Sekunden und insbesondere im Bereich von 15 - 20 Sekunden eingestellt werden. Die Einstellung einer solchen Reaktionszeit bzw. Startzeit ist der Fachperson bekannt und entsprechende Komponenten für die Schaumbildung sind handelsüblich und deren Startzeit ist definiert. Allenfalls kann den Schaumkomponenten ein Retardationsmittel hinzugefügt werden. Beim vorliegenden Verfahren wird vorzugsweise ein flexibler PUR-Isolierschaum verwendet und die zu dessen Herstellung verwendeten Polyol- und Isocyanatkomponenten sind der Fachperson mit der Einstellung der Startzeit bekannt.

Bevorzugt ist im Extruder 27 aussen um das Schutzrohr 26 ein Kühlmittel für das Schutzrohr vorgesehen, zum Beispiel in der Form von einer dieses umgebenden Kühlschlange oder einem Kühlrohr 16, wie es in den Figuren 3 und 4 dargestellt ist. Das Kühlrohr 16 ist in Wärmeflussverbindung mit einem herkömmlichen, nur als Block 34 angedeuteten Kühlaggregat der Vorrichtung 10. Dieses bewirkt eine Kühlung des Kühlrohrs 16 und damit des im Extruder 27 in diesem Kühlrohr 16 verlaufenden Schutzrohrs 26. Das Schutzrohr 26 kann im Extruder auf eine Temperatur gekühlt werden, welche als Beispiel im Bereich von 10 Grad Celsius bis 20 Grad Celsius liegt und insbesondere bei ca. 15 Grad Celsius liegt. Die Kühlung ist bevorzugt vorhanden, um die Reaktionszeit bzw. Startzeit der Komponenten für die Bildung des Wärmedämmschaums genauer einhalten zu können, bzw. diese von der Wärmeerzeugung des Extruders unabhängig zu machen.

Das Schutzrohr 26 ist bevorzugt mindestens im Extrusionsbereich des Extruders mit einer reibungsmindernden Beschichtung versehen, zum Beispiel einer PTFE-Beschichtung, was ein Verkleben des extrudierten Aussenmantelmaterials mit dem Schutzrohr verhindert. Es wird zwar nicht auf das Schutzrohr extrudiert, es kann jedoch vorkommen, dass das Extrudat in Berührung mit dem Schutzrohr kommt. Innenseitig ist das Schutzrohr 26 ebenfalls mit einer reibungshemmenden Beschichtung, insbesondere einer PTFE-Beschichtung versehen. Dadurch gleitet der Folienschlauch möglichst reibungsarm entlang der Innenfläche des Schutzrohrs.

Als Material für den Folienschlauch kann eine herkömmlicherweise für diesen Zweck bereits bekannte PE-Folie verwendet werden. Diese verbindet sich bei der Aufschäumung des Wärmedämmschaums mit der noch heissen Innenfläche des Aussenmantels 4. Es kann auch eine Verbundfolie verwendet werden, zum Beispiel eine mit der Schichtabfolge PE-PA-PE hergestellte Folie. Ein Vorteil einer Folie mit Polyamid liegt in deren besseren Temperaturbeständigkeit, insbesondere bis 200 Grad Celsius, im Vergleich zu einer reinen PE-Folie. Bevorzugt wird für den Folienschlauch eine dünne Folie mit einer Dicke im Bereich von 0.01 mm bis 0.20 mm und insbesondere mit einer Dicke von 50 Mikrometer bis 120 Mikrometer verwendet. Eine dünne Folie erleichtert das Eindringen des Wärmedämmschaumes in die bereits geformten Hohlräume der Wellung des Aussenmantels, sofern dies beim hergestellten Leitungsrohr 1 erwünscht ist. Mit anderen Worten, durch die Wahl einer im Vergleich dickeren Folie kann das Ausfüllen der Hohlräume reduziert oder weitgehend verhindert werden, wenn dies gewünscht ist.

Vorzugsweise ist ferner das Schutzrohr innerhalb der Vorrichtung 10 in deren Längsrichtung verstellbar, um das Ende 26' des Schutzrohrs in seiner Lage im Corrugator einzustellen. Damit kann das Ende des Schutzrohrs in den Bereich eingestellt werden, in welcher der Aussenmantel fertig geformt ist.

Beim der vorliegenden Erfindung bzw. dem Verfahren zur kontinuierlichen Herstellung eines wärmegedämmten, gewellten Leitungsrohrs 1 mit einem Innenrohr 2 wird somit zunächst der gewellte Aussenmantel mit einem Extruder 27 und mit einem Corrugator 28 erzeugt und das in einem Folienschlauch zusammen mit einem schaumbildenden Ausgangsmaterial angeordnete Innenrohr 2 wird mit verzögerter Schaumbildung bis in den Corrugator geführt, in welchem der zuvor korrugierte Aussenmantel des Leitungsrohrs mit dem Wärmedämmschaum gefüllt wird. Die zur Ausführung des Verfahrens vorgesehene Vorrichtung 10 weist ein Schutzrohr 26 auf, mittels welchem das vom Folienschlauch umgebene Innenrohr getrennt von der Extrusion und Korrugation des Aussenmantels bis in den Corrugator führbar ist.

## Patentansprüche

1. Verfahren zur kontinuierlichen Herstellung eines Leitungsrohrs (1), welches Leitungsrohr mindestens ein Innenrohr (2), eine geschäumte Wärmedämmung (3) und einen gewellten Aussenmantel (4) aus Kunststoff umfasst, mit den Schritten:
- Bilden eines Folienschlauchs um das mindestens eine Innenrohr (2) und Einbringen des schaumbildenden Ausgangsmaterials für die Bildung der geschäumten Wärmedämmung in den Folienschlauch,
- Hindurchführen des Innenrohrs mit dem Folienschlauch durch einen Extruder (27), mittels welchem der Aussenmantel ringförmig extrudiert wird, und
- Erzeugen der Wellform des Aussenmantels (4) in einem Corrugator (28),
wobei
- der Aussenmantel getrennt von dem vom Folienschlauch umgebenen Innenrohr in den Corrugator geführt und im Corrugator geformt wird und
- die Bildung der geschäumten Wärmedämmung (3) im zuvor korrugierten Aussenmantel erfolgt, indem eine Startzeit für die Reaktion der in den Folienschlauch eingefüllten schaumbildenden Komponenten des Ausgangsmaterials derart einstellbar ist, dass ein Gemisch aus den schaumbildenden Komponenten beim Eintritt in den Corrugator noch flüssig ist,
**dadurch gekennzeichnet, dass** die Reaktivität des Gemisches derart eingestellt ist, dass je nach der Geschwindigkeit der Herstellungslinie für das Leitungsrohr und den Temperaturverhältnissen die Schäumreaktion erst im Corrugator erfolgt.

2. Verfahren nach Anspruch 1, wobei die Formung des Aussenmantels im Corrugator durch Einsatz von Vakuum zur Formbildung erfolgt.

3. Verfahren nach Anspruch 1 oder 2, wobei ein schaumbildendes Ausgangsmaterial verwendet wird, dessen Reaktionszeit bzw. Startzeit auf 10 Sekunden bis 60 Sekunden einstellbar ist, und insbesondere ein schaumbildendes Ausgangsmaterial verwendet wird, dessen Reaktionszeit bzw. Startzeit auf 15 Sekunden bis 20 Sekunden einstellbar ist.

4. Verfahren nach einem der Ansprüche 1 bis 3, wobei die Bildung der geschäumten Wärmedämmung durch Kühlung verzögert wird, wobei insbesondere bei der Hindurchführung des Innenrohrs mit dem Folienschlauch durch den Extruder (27) eine Kühlung des Folienschlauchs mit dem darin enthaltenen Ausgangsmaterial für die Bildung der geschäumten Wärmedämmung erfolgt.

5. Verfahren nach einem der Ansprüche 1 bis 4, wobei das vom Folienschlauch umgebene Innenrohr (2) mittels eines Schutzrohrs (26) durch den Extruder (27) geführt wird, wobei das Schutzrohr bis in die geschlossenen Formteile (38) des Corrugators geführt ist.

6. Verfahren nach Anspruch 5, wobei das Schutzrohr innenseitig, vorzugsweise auch aussenseitig, mit einer reibungsmindernden Beschichtung versehen ist, insbesondere mit einer Polytetrafluorethylen (PTFE) enthaltenden oder aus diesem bestehenden Beschichtung.

7. Verfahren nach Anspruch 5 oder 6, wobei das Schutzrohr in Längsrichtung des Extruders verstellbar ist und wobei die Lage dessen vorderen Endes (26') im Corrugator derart eingestellt wird, dass der Aussenmantel in dem um das Schutzrohr herum verlaufenden Abschnitt des Corrugators fertig geformt ist.

8. Verfahren nach einem der Ansprüche 1 bis 7, wobei für die Bildung des Folienschlauchs eine mit Polyethylen (PE) beschichtet Folie verwendet wird, insbesondere eine einseitig oder beidseitig mit Polyethylen beschichtete Polyamidfolie.

9. Verfahren nach einem der Ansprüche 1 bis 8, wobei für die Bildung des Kunststoffschlauchs eine Folie mit einer Dicke von 0.01 mm bis 0.20 mm, insbesondere mit einer Dicke von 50 µm bis 120 µm verwendet wird.

10. Vorrichtung (10) zur kontinuierlichen Herstellung eines Leitungsrohrs (1), welches mindestens ein Innenrohr (2), eine das Innenrohr umgebende geschäumte Wärmedämmung (3) sowie einen gewellten Aussenmantel (4) aufweist, welche Vorrichtung in im Wesentlichen linienförmiger Abfolge eine erste Einrichtung (22) zur Abwicklung des Innenrohrs (2) von einem Vorratswickel (21), eine zweite Einrichtung (24, 25) zur Bildung eines Folienschlauchs um das mindestens eine Innenrohr (2) herum und zur Einbringung eines schaumbildenden Ausgangsmaterials in den Folienschlauch sowie einen Extruder (27), einen Corrugator (28) und eine Einrichtung (32, 33) zur Aufwicklung des aus dem Corrugator austretenden Leitungsrohrs (1) aufweist, wobei durch den Extruder führend ein in der Längsrichtung der Vorrichtung liegendes Schutzrohr (26) vorgesehen ist, welches bis in den Corrugator (28) geführt ist, in welchem Schutzrohr das vom Folienschlauch umgebene Innenrohr durch den Extruder führbar ist, derart, dass das vom Extruder erzeugte Extrudat im Corrugator getrennt vom im Schutzrohr geführten Innenrohr korrugierbar ist,
**dadurch gekennzeichnet, dass** das Schutzrohr (26) in der Vorrichtung derart gehalten ist, dass es in seiner Längsrichtung einstellbar verschiebbar ist und eine Kühleinrichtung (34) vorgesehen ist, durch welche das Schutzrohr (26) innerhalb des Extruders kühlbar ist.

11. Vorrichtung nach Anspruch 10, wobei das Ende (26') des in den Corrugator geführten Schutzrohrs (26) in dem Bereich des Corrugators liegt, in welchen die Formteile des Corrugators vollständig geschlossen sind.

12. Vorrichtung nach Anspruch 10 oder 11, wobei das Schutzrohr innenseitig, vorzugsweise auch aussenseitig, mit einer reibungsmindernden Beschichtung versehen ist, insbesondere mit einer Polytetrafluorethylen (PTFE) enthaltenden oder aus diesem bestehenden Beschichtung.

## Claims

1. Method for the continuous production of a line pipe (1), which line pipe comprises at least an inner pipe (2), a foamed thermal insulation (3) and a corrugated outer jacket (4) of plastic, comprising the steps
- forming a foil tube around the at least one inner pipe (2) and introducing the foam-forming starting material for forming the foamed thermal insulation into the foil tube,
- passing the inner pipe with the foil tube through an extruder (27), by means of which the outer jacket is extruded in a ring shape, and
- generating the corrugated shape of the outer jacket (4) in a corrugator (28),
wherein
- the outer jacket is fed into the corrugator separately from the inner pipe surrounded by the foil tube and formed in the corrugator, and
- the formation of the foamed thermal insulation (3) takes place in the previously corrugated outer jacket by setting a starting time for the reaction of the foam-forming components of the initial material filled into the foil tube in such a way that a mixture of the foam-forming components is still liquid when entering into the corrugator,
**characterized in that** the reactivity of the mixture is adjusted so that, depending on the speed of the production line for the line pipe and the temperature conditions, the foaming reaction only takes place in the corrugator.

2. Method according to claim 1, wherein the forming of the outer jacket in the corrugator is carried out by using vacuum for forming.

3. Method according to claim 1 or 2, wherein a foam-forming starting material is used, the reaction time or start time of which is adjustable from 10 seconds to 60 seconds, and in particular a foam-forming starting material is used, the reaction time or start time of which is adjustable from 15 seconds to 20 seconds.

4. Method according to one of claims 1 to 3, wherein the formation of the foamed thermal insulation is delayed by cooling, wherein in particular when the inner pipe with the foil tube is passed through the extruder (27), cooling of the foil tube with the starting material contained therein for the formation of the foamed thermal insulation is effected.

5. Method according to one of claims 1 to 4, wherein the inner pipe (2) surrounded by the foil tube is guided through the extruder (27) by means of a protective pipe (26), wherein the protective pipe is guided into the closed mould parts (38) of the corrugator.

6. Method according to claim 5, wherein the protective pipe is provided on the inside, preferably also on the outside, with a friction-reducing coating, in particular with a coating containing polytetrafluoroethylene (PTFE) or consisting thereof.

7. Method according to claim 5 or 6, wherein the protective pipe is adjustable in longitudinal direction of the extruder and wherein the position of its front end (26') in the corrugator is adjusted in such a way that the outer jacket is completely formed in the section of the corrugator extending around the protective pipe.

8. Method according to one of claims 1 to 7, wherein a foil coated with polyethylene (PE) is used to form the foil tube, in particular a polyamide foil coated on one or both sides with polyethylene.

9. Method according to one of claims 1 to 8, wherein a foil with a thickness of 0.01 mm to 0.20 mm, in particular with a thickness of 50 µm to 120 pm, is used for the formation of the plastic tube.

10. Device (10) for the continuous production of a line pipe (1) which has at least one inner pipe (2), a foamed thermal insulation (3) surrounding the inner pipe and a corrugated outer jacket (4), which device comprises, in substantially linear sequence, a first device (22) for unwinding the inner pipe (2) from a supply reel (21), a second device (24, 25) for forming a foil tube around the at least one inner pipe (2) and for introducing a foam-forming starting material into the foil tube, and an extruder (27), a corrugator (28) and a device (32, 33) for winding the line pipe (1) emerging from the corrugator, wherein a protective pipe (26) is provided leading through the extruder and lying in longitudinal direction of the device, which extends into the corrugator (28), in which protective pipe the inner pipe surrounded by the foil tube can be guided through the extruder in such a way that the extrudate produced by the extruder is corrugated in the corrugator separately from the inner pipe guided in the protective pipe,
**characterized in that** the protective pipe (26) is held in the device in such a way that it can be displaced adjustably in its longitudinal direction an **in that** a cooling device (34) is provided, by means of which the protective pipe (26) is cooled within the extruder.

11. Device according to claim 10, wherein the end (26') of the protective pipe (26) guided into the corrugator lies in the region of the corrugator in which the mould parts of the corrugator are completely closed.

12. Device according to claim 10 or 11, wherein the protective pipe is provided on the inside, preferably also on the outside, with a friction-reducing coating, in particular with a coating containing or consisting of polytetrafluoroethylene (PTFE).

## Revendications

1. Procédé pour la production en continu d'un tube de conduite (1), lequel tube de conduite comprend au moins un tuyau intérieur (2), une isolation thermique en mousse (3) et une enveloppe extérieure ondulée (4) en plastique, comprenant les étapes suivantes
- former un tube en feuille autour du au moins un tuyau intérieur (2) et introduire le matériau de départ de formation de mousse pour former l'isolation thermique en mousse dans le tube en feuille,
- faire passer le tuyau intérieur avec le tube en feuille à travers une extrudeuse (27), au moyen de laquelle l'enveloppe extérieure est extrudée en forme d'anneau, et
- générer la forme ondulée de l'enveloppe extérieure (4) dans un onduleur (28),
dans lequel
- l'enveloppe extérieure est introduite dans l'onduleur séparément du tube intérieur entouré par le tube en feuille et formée dans l'onduleur, et
- la formation de l'isolation thermique en mousse (3) a lieu dans l'enveloppe extérieure préalablement ondulée en fixant un temps de départ pour la réaction des composants formant la mousse du matériau initial rempli dans le tube en feuille de telle sorte qu'un mélange des composants formant la mousse est encore liquide lorsqu'il entre dans l'onduleur,
**caractérisé en ce que** la réactivité du mélange est ajustée de telle sorte que, en fonction de la vitesse de la ligne de production pour le tube de conduite et des conditions de température, la réaction de moussage n'a lieu que dans l'onduleur.

2. Procédé selon la revendication 1, dans lequel le formage de l'enveloppe extérieure dans l'onduleur est réalisé en utilisant le vide pour le formage.

3. Procédé selon la revendication 1 ou 2, dans lequel une matière première moussante est utilisée, dont le temps de réaction ou le temps de démarrage est réglable de 10 secondes à 60 secondes, et en particulier une matière première moussante est utilisée, dont le temps de réaction ou le temps de démarrage est réglable de 15 secondes à 20 secondes.

4. Procédé selon l'une des revendications 1 à 3, dans lequel la formation de l'isolation thermique en mousse est retardée par refroidissement, en particulier lorsque le tuyau intérieur avec le tube en feuille est passé à travers l'extrudeuse (27), un refroidissement du tube en feuille avec le matériau de départ contenu dans celui-ci pour la formation de l'isolation thermique en mousse est effectué.

5. Procédé selon l'une des revendications 1 à 4, dans lequel le tuyau intérieur (2) entouré du tube en feuille est guidé à travers l'extrudeuse (27) au moyen d'un tube de protection (26), le tube de protection étant guidé dans les parties de moule fermées (38) de l'onduleuse.

6. Procédé selon la revendication 5, dans lequel le tube de protection est muni à l'intérieur, de préférence également à l'extérieur, d'un revêtement réduisant le frottement, en particulier d'un revêtement contenant du polytétrafluoroéthylène (PTFE) ou constitué de celui-ci.

7. Procédé selon la revendication 5 ou 6, dans lequel le tube de protection est réglable dans la direction longitudinale de l'extrudeuse et dans lequel la position de son extrémité avant (26') dans l'onduleur est réglée de telle sorte que l'enveloppe extérieure soit complètement formée dans la section de l'onduleur s'étendant autour du tube de protection.

8. Procédé selon l'une des revendications 1 à 7, dans lequel une feuille revêtue de polyéthylène (PE) est utilisée pour former le tube en feuille, notamment une feuille de polyamide revêtue sur une ou deux faces de polyéthylène.

9. Procédé selon l'une des revendications 1 à 8, dans lequel une feuille d'une épaisseur de 0,01 mm à 0,20 mm est utilisée, en particulier d'une épaisseur de 50 µm à 120 µm, pour former le tube en matière plastique.

10. Dispositif (10) pour la fabrication en continu d'un tube de conduite (1) qui comporte au moins un tuyau intérieur (2), une isolation thermique en mousse (3) entourant le tuyau intérieur et une enveloppe extérieure ondulée (4), lequel dispositif comprend, en séquence sensiblement linéaire, un premier dispositif (22) pour dérouler le tuyau intérieur (2) d'une bobine d'alimentation (21), un deuxième dispositif (24, 25) pour former un tube en feuille autour du au moins un tuyau intérieur (2) et pour introduire un matériau de départ formant une mousse dans le tube en feuille, et une extrudeuse (27), un onduleur (28) et un dispositif (32, 33) pour enrouler le tube de conduite (1) sortant de l'onduleur, dans lequel il est prévu un tube de protection (26) traversant l'extrudeuse et situé dans la direction longitudinale du dispositif, qui s'étend dans l'onduleur (28), dans lequel le tuyau intérieur entouré par le tube en feuille peut être guidé à travers l'extrudeuse de telle sorte que l'extrudat produit par l'extrudeuse est ondulé dans l'onduleur séparément du tuyau intérieur guidé dans le tube de protection,
**caractérisé en ce que** le tube de protection (26) est maintenu dans le dispositif de manière à pouvoir être déplacé de façon réglable dans sa direction longitudinale et **en ce qu'**il est prévu un dispositif de refroidissement (34) au moyen duquel le tube de protection (26) est refroidi à l'intérieur de l'extrudeuse.

11. Dispositif selon la revendication 10, dans lequel l'extrémité (26') du tube de protection (26) guidée dans l'onduleur se trouve dans la zone de l'onduleur dans laquelle les parties de moule de l'onduleur sont complètement fermées.

12. Dispositif selon la revendication 10 ou 11, dans lequel le tube de protection est muni à l'intérieur, de préférence également à l'extérieur, d'un revêtement réduisant le frottement, en particulier d'un revêtement contenant ou constitué de polytétrafluoroéthylène (PTFE).
